Europäisches Patentamt

European Patent Office

Office européen des brevets

(11) Publication number: **0 054 263**
**B1**

(12) EUROPEAN PATENT SPECIFICATION

(45) Date of publication of patent specification: **20.03.85**

(51) Int. Cl.[4]: **C 03 B 37/025,** C 03 B 37/07, C 03 B 20/00

(21) Application number: **81110315.9**

(22) Date of filing: **10.12.81**

(54) Process for producing optical fiber preform and apparatus therefor.

(30) Priority: **12.12.80 JP 174726/80**

(43) Date of publication of application:
**23.06.82 Bulletin 82/25**

(45) Publication of the grant of the patent:
**20.03.85 Bulletin 85/12**

(84) Designated Contracting States:
**DE FR GB IT**

(56) References cited:
**US-A-4 062 665**

**Patent Abstracts of Japan Vol. 5, No. 114, 23 July 1981 page 111C64**

**Patent Abstracts of Japan Vol. 2, No. 121, 12 October 1978 page 7087E78**

**Patent Abstracts of Japan Vol. 5, No. 98, 25 June 1981**

(73) Proprietor: **Nippon Telegraph and Telephone Public Corporation**
**1-6 Uchisaiwai-cho 1-chome Chiyoda-ku Tokyo 100 (JP)**

(73) Proprietor: **SUMITOMO ELECTRIC INDUSTRIES LIMITED**
**No. 15, Kitahama 5-chome Higashi-ku Osaka-shi Osaka-fu (JP)**

(72) Inventor: **Nakahara, Motohiro**
**No. 52, Senba 2057**
**Mito-shi Ibaraki (JP)**
Inventor: **Yoshioka, Naoki c/o Yokohama Works of Sumitomo**
**Electric Industries, Ltd No. 1, Taya-cho Totsuka-ku Yokohama-shi Kanagawa (JP)**
Inventor: **Yokota, Hiroshi c/o Yokohama Works of Sumitomo**
**Electric Industries, Ltd. No. 1, Taya-cho Totsuka-ku Yokohama-shi Kanagawa (JP)**
Inventor: **Miyaziri, Tetsuo c/o Yokohama Works of Sumitomo**
**Electric Industries, Ltd. No. 1, Taya-cho Totsuka-ku Yokohama-shi Kanagawa (JP)**
Inventor: **Watanabe, Minoru c/o Yokohama Works of Sumitomo**
**Electric Industries, Ltd. No. 1, Taya-cho Totsuka-ku Yokohama-shi Kanagawa (JP)**

Courier Press, Leamington Spa, England.

0 054 263

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

# Description

The invention relates to a process for producing an optical fiber preform by oxidizing a gaseous glass forming material with a flame from a burner and depositing the resulting soot in a rod form, wherein two signal beams are supplied by splitting a light beam, one of the beams is projected in a direction normal to the direction in which the preform grows and is directed into the space between the burner and the deposition surface of the preform partially contacting the deposition surface of the preform, the distance between the burner and the deposition surface of the preform being kept constant by means of an electric signal dependent on the ratio of intensity of the two beams.

Furthermore, the invention also relates to an apparatus for producing an optical fiber preform by oxidizing a gaseous glass forming material with a flame from a burner and depositing the resulting soot in a rod form, comprising a means for providing a light beam, a beam splitter for splitting the beam into first and second signal beams, one of the two signal beams is passing between the burner and the deposition surface of the preform in a direction normal to the direction in which the preform grows, partially contacting the deposition surface of the preform the first and second signal beams are impinging on first and second light receiving elements for determining the light intensities thereof, the light receiving elements being electrically connected to a control means responsive to an electric signal dependent on the ratio of the intensity of the two signal beams and apt to keep the distance constant between the burner and the deposition surface by movement of the deposition surface.

Fiber optics technology has advanced to such a level that it is now possible to fabricate a product having a transmission loss essentially reduced to the theoretical limit. The transmission bandwidth is an important factor for producing a long fiber that can be used for communications without repeaters. Since the transmission bandwidth depends mainly on the distribution of the refractive index across the fiber cross-section, the cross-sectional refractive index distribution must be uniform in the longitudinal direction in order to produce a useful long fiber. Optical fibers are generally produced by a method comprising oxidizing gaseous glass-forming materials (such as $SiCl_4$, $GeCl_4$ and $POCl_4$) with the flame from a burner (usually an oxyhydrogen flame burner) and depositing the resulting soot in a rod shape which is then sintered in an electric furnace until it is vitrified, and spinning the resulting transparent glass preform to form a fiber, as disclosed in US—A—4 224 046, US—A—4 135 907 and Proceedings of the I.E.E.E., Vol. 68, No. 10, 1980, titled "Materials and Processes for Fiber Preform Fabrication — Vapor Phase Axial Deposition" by T. Izawa et al. The soot usually contains a dopant that modifies the refractive index of the glass. Therefore, if the distance between the burner and the deposition face of the preform formed by accumulating the soot in a rod form varies, the distribution of the dopant also changes, causing undesirable variations in the refractive index distribution of the resulting optical fiber.

A process and an apparatus of the afore-described kinds are known from US—A—4 062 665 and JP—A—53-87245. The aforementioned disadvantages have been reduced by such a process and apparatus. However, the drawbacks remain, in that the flame oxidization is usually carried out in a vessel which is isolated from the outside atmosphere in order to prevent contamination by impurities and, therefore, as the production period is extended, soot adheres to the inner surface of the windows, through which the one beam has to pass, which gradually become opaque, whereby the ratio between the intensities of the two beams is unduly affected, thus causing an alteration of the distance between the burner and the deposition surface.

The invention as claimed is intended to remedy these drawbacks. It solves the problem of how to improve a process and an apparatus for producing an optical fiber preform by oxidizing a gaseous glass forming material, such that the distance between the burner and the deposition surface of a preform may be kept constant automatically and with high accuracy, so as to produce a long optical fiber having a uniform refractive index distribution in an axial direction.

In accordance to the invention, both signal beams are directed such that they pass between the burner and the deposition surface, one of these signal beams is in partial contact with the deposition surface of the preform. Due to this arrangement, the two signal beams have to traverse the same amount of glass soot deposited on the inner surface of the glass windows where they pass through. As the distance between the burner and the deposition surface of the preform is kept constant by means of an electric signal dependent on the ratio of intensity of the two signal beams. This ratio is not affected by a transmission loss of the intensities of the two signal beams. Therefore, the distance between the burner and the deposition surface of the preform can be kept constant with a high accuracy, and the production of an optical fiber preform is not affected by practically any kind of turbulence, resulting in a preform of very good quality and a uniform distribution of the refractive index in the axial direction.

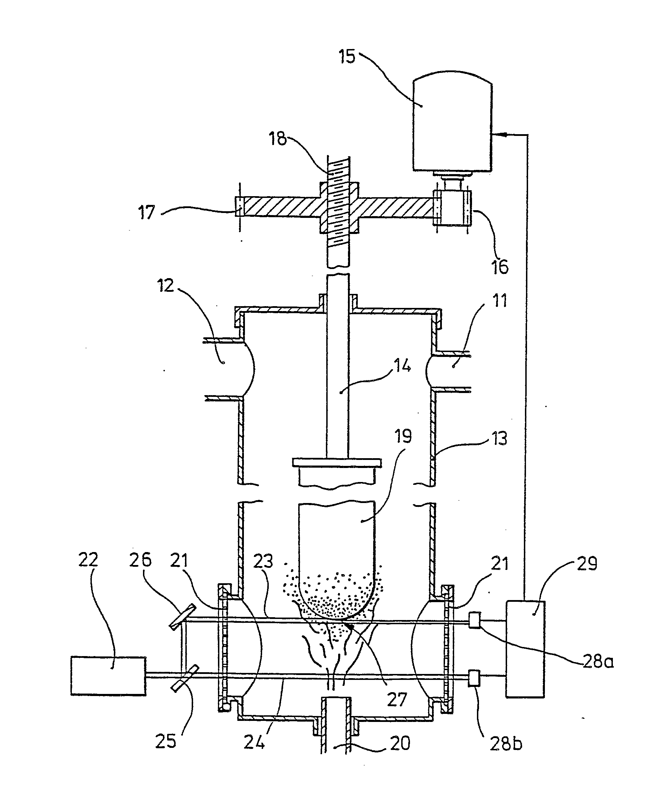

One way of carrying out the invention is described in detail below with reference to the drawing illustrating only one specific embodiment.

A protecting vessel (muffle furnace) 13 having an air supply port 11 and an exhaust port 12 also has a supporting rod 14 which is inserted into the muffle furnace 13 through an opening in the top of the muffle furnace and which is raised as it is rotated at a desired speed by a rotating mechanism (not shown). A motor 15 has a drive gear 16 that meshes with a gear 17 which further engages a feed screw 18 threaded within the rod 14 to provide for vertical movement. As a preform 19 builds up in a rod shape on the tip of the rod 14, the rod is lifted by being rotated with the rotating mechanism and the motor 15. Below the muffle furnace 13 is disposed an oxyhydrogen flame burner 20 that issues upwardly a gaseous glass forming material such as $SiCl_4$, $GeCl_4$ and $POCl_4$ and a dopant such as $GeCl_4$ for modifying the refractive index of glass as well as oxygen and hydrogen, to produce soot by flame oxidation at about 1000°C. The soot deposits on the tip of the rod 14 to form a rod-shaped preform 19.

Below the muffle furnace 13 are also arranged a pair of heat-resistant glass windows 21 that face each other across the muffle furnace 13. On the side of one of the windows 21 are arranged a laser oscillator 22, e.g., a He-Ne laser oscillator, a beam splitter 25 that splits a laser beam from the oscillator into two signal beams 23 and 24, and a reflecting mirror 26. On the side of the other window 21 are arranged light-receiving elements 28a and 28b that receive the beams 23 and 24, respectively, that have passed through the flame between the burner 20 and the deposition surface 27 of the preform, and a control means 29 that detects electrically the ratio of the intensity of the beams coming from the elements 28a and 28b, and controls the rotational speed of the drive gear 16 of the motor 15 so that the ratio remains constant. The two signal beams 23 and 24 are projected in a direction normal to the direction in which the supporting rod 14 ascends, and they are so positioned that one beam 23 contacts the deposition surface 27 of the preform 19 while the other beam 24 passes just above the burner 20.

In the arrangement described above, once the distance between the burner 20 and the deposition surface 27 of the preform has been set at a given level, the ratio of the intensity of the two signal beams 23 and 24 is determined and fed into the control means 29 which controls automatically the rotational speed of the gear 16 so that said ratio remains constant, thereby keeping the distance between the burner 20 and the deposition surface 27 of the preform constant throughout the fabrication of the preform. As a result, the preform 19 has a uniform refractive index distribution in a longitudinal direction and hence can be used with advantage in the production of a long optical fiber having small transmission loss. Furthermore, the glass soot that builds up on the inner surface of the glass windows 21 causes only an equal change in the brightness of the two signal beams, and this change has no adverse affect on the process of the present invention that uses the ratio of their intensity to control the rotational speed of the gear 16.

## Claims

1. A process for producing an optical fiber preform (19) by oxidizing a gaseous glass-forming material with a flame from a burner (20) and depositing the resulting soot in a rod form, wherein two signal beams (23, 24) are applied by splitting a light beam, one (23) of the beams is projected in a direction normal to the direction in which the preform (19) grows and is directed into the space between the burner (20) and the deposition surface (27) of the preform (19) partially contacting the deposition surface (27) of the preform (19), the distance between the burner (20) and the deposition surface (27) of the preform being kept constant by means of an electric signal dependent on the ratio of intensity of the two beams, characterized in that the other (24) of the two beams is also projected in the direction normal to the direction in which the preform (19) grows and is directed into the space between the burner (20) and the deposition surface (27) of the preform (19) to pass between the burner (20) and the deposition surface (27).

2. A process according to claim 1, characterized in that the two signal beams (23, 24) are projected between the burner (20) and the deposition surface (27) from a laser oscillator (22).

3. An apparatus for producing an optical fiber preform (19) by oxidizing a gaseous glass-forming material with a flame from a burner (20) and depositing the resulting soot in a rod form, comprising a means (22) for providing a light beam, a beam splitter (25) for splitting the beam into first and second signal beams (23, 24), one (23) of the two signal beams (23, 24) passing between the burner (20) and the deposition surface (27) of the preform (19) in a direction normal to the direction in which the preform (19) grows, partially contacting the deposition surface (27) of the preform (19), the first and second signal beams (23, 24) impinging on first and second light receiving elements (28a, 28b) for determining the light intensities thereof, the light receiving elements (28a, 28b) being electrically connected to a control means (15, 29) responsive to an electric signal dependent on the ratio of the intensity of the two signal beams (23, 24) and apt to keep the distance constant between the burner (20) and the deposition surface (27) by movement of the deposition surface (27), characterized in that the other (24) of the two signal beams passes between the burner (20) and the deposition surface (27) in a direction normal to the direction in which the preform (19) grows.

## Revendications

1. Procédé pour produire une préforme de fibre optique (19) par oxydation d'un matériau gazeux formant du verre à l'aide de la flamme d'un brûleur (20) et dépôt de la suie obtenue sous forme d'un barreau, selon lequel on produit deux faisceaux de contrôle (23, 24) par fractionnement d'un faisceau lumineux, on projette l'un (23) des faisceaux en une direction normale à la direction dans laquelle croît la préforme (19) et on le dirige dans l'espace entre le brûleur (20) et la surface de dépôt (27) de la préforme (19), de manière qu'une partie de ce faisceau vienne en contact avec la surface de dépôt (27) de la préforme (19), et on maintient la distance entre le brûleur (20) et la surface de dépôt (27) de la préforme à une valeur constante au moyen d'un signal électrique dépendant du rapport des intensités des deux faisceaux, caractérisé en ce que l'on projette l'autre faisceau (24) aussi dans la direction normale à la direction dans laquelle croît la préforme (19) et on l'envoie dans l'espace entre le brûleur (20) et la surface de dépôt (27) de la préforme (19) de manière qu'il passe entre le brûleur (20) et la surface de dépôt (27).

2. Procédé selon la revendication 1, caractérisé en ce que l'on projette les deux faisceaux de contrôle (23, 24) entre le brûleur (20) et la surface de dépôt (27) à partir d'un oscillateur laser (22).

3. Appareil pour produire une préforme de fibre optique (19) par oxydation d'un matériau gazeux formant du verre à l'aide de la flamme d'un brûleur (20) et dépôt de la suie obtenue sous forme d'un barreau, comprenant un dispositif (22) pour fournir un faisceau lumineux, un diviseur de faisceau pour fractionner le faisceau lumineux en un premier et un second faisceau de contrôle (23, 24), l'un (23) des deux faisceaux de contrôle (23, 24) passant entre le brûleur (20) et la surface de dépôt (27) de la préforme (19) en une direction normale à la direction dans laquelle croît la préforme, en venant par une partie en contact avec la surface de dépôt (27) de la préforme (19), les premier et second faisceaux de contrôle (23, 24) tombant sur un premier (28a) et un second (28b) élément récepteur de lumière, qui sont destinés à déterminer leurs intensités lumineuses, les éléments récepteurs de lumière (28a, 28b) étant connectés électriquement à un dispositif de commande (15, 29) sensible à un signal électrique dépendant du rapport des intensités des deux faisceaux de contrôle (23, 24) et le dispositif de commande étant capable de maintenir la distance entre le brûleur (20) et la surface de dépôt (27) à une valeur constante par le déplacement de la surface de dépôt (27), caractérisé en ce que l'autre (24) des deux faisceaux de contrôle passe entre le brûleur (20) et la surface de dépôt (27) en une direction normale à la direction dans laquelle croît la préforme (19).

**Patentansprüche**

1. Verfahren zur Herstellung eines Vorformlings (19) für optische Fasern, bei dem ein gasförmiges, glasbildendes Material mit einer Flamme von einem Brenner (20) oxidiert und der sich ergebende Ruß in Stabform niedergeschlagen wird, wobei durch Teilen eines Lichtbündels zwei Signalbündel (23, 24) vorgesehen werden, von denen eines (23) in einer zu der Richtung, in welcher der Vorformling (19) wächst, senkrechten Richtung gerichtet und in den Raum zwischen dem Brenner (20) und der Niederschlagsoberfläche (27) des Vorformlings (19) unter teilweiser Berührung der Niederschlagsoberfläche (27) des Vorformlings (19) gelenkt wird und der Abstand zwischen dem Brenner (20) und der Niederschlagsoberfläche (27) des Vorformlings mittels eines elektrischen Signals konstant gehalten wird, welches von dem Verhältnis der Intensität der zwei Bündel abhängt, dadurch gekennziechnet, daß das andere (24) der beiden Bündel ebenfalls in der zu der Richtung, in welcher der Vorformling (19) wächst, senkrechten Richtung gerichtet und in den Raum zwischen dem Brenner (20) und der Niederschlagsoberfläche (27) des Vorformlings (19) gelenkt wird, um zwischen dem Brenner (20) und der Niederschlagsoberfläche (27) hindurchzugegen.

2. Verfahren nach Anspruch 1, dadurch gekennzeichnet, daß die zwei Signalbündel (23, 24) von einem Laseroszillator (22) her zwischen dem Brenner (20) und der Niederschlagsoberfläche (27) gerichtet sind.

3. Vorrichtung zur Herstellung eines Vorformlings (19) für optische Fasern durch Oxydieren eines gasförmigen, glasbildenden Materials mit einer Flamme von einem Brenner (20) und Niederschlagen des sich ergebenden Rußes in Stangenform, mit einer Einrichtung (22) zur Erzeugung eines Lichtbündels, einem Strahlteiler (25) zum Teilen des Bündels in ein erstes und ein zweites Signalbündel (23, 24), wobei eines (23) der zwei Signalbündel (23, 24) zwischen dem Brenner (20) und der Niederschlagsoberfläche (27) des Vorformlings (19) in einer zu der Richtung, in der der Vorformling (19) wächst, senkrechten Richtung unter teilweiser Berührung der Niederschlagsoberfläche (27) des Vorformlings (19) hindurchgeht, das erste und das zweite Signalbündel (23, 24) auf erste und zweite Lichtempfangselemente (28a, 28b) auftreffen, um deren Lichtintensitäten zu bestimmten, die Lichtempfangselemente (28a, 28b) elektrisch mit einer Steuereinrichtung (15, 29) verbunden sind, die auf ein elektrisches von dem Verhältnis der Intensitäten der zwei Signalbündel (23, 24) abhängendes Signal anspricht und durch die der Abstand zwischen dem Brenner (20) und der Niederschlagsoberfläche (27) durch Bewegung der Niederschlagsoberfläche (27) konstant haltbar ist, dadurch gekennzeichnet, daß das andere (24) der zwei Signalbündel zwischen dem Brenner (20) und der Niederschlagsoberfläche (27) in einer Richtung hindurchgeht, die zu der Richtung senkrecht ist, in welcher der Vorformling (19) wächst.